# EUROPÄISCHE PATENTSCHRIFT

(11) **EP 2 525 937 B1**
(45) Veröffentlichungstag und Bekanntmachung des Hinweises auf die Patenterteilung: **11.02.2015**
(21) Anmeldenummer: 10793156.0
(22) Anmeldetag: 07.12.2010
(51) Int. Cl.: B23K 11/14, B23K 11/31

(54) **SCHWEISSELEKTRODENEINHEIT, SCHWEISSVORRICHTUNG UND VERFAHREN ZUM ERZEUGEN EINER SCHWEISSVERBINDUNG**
WELDING ELECTRDE UNIT, WELDING DEVICE UND METHOD OF PRODUCING A WELDED JOINT
PORTE-ÉLECTRDE DE SOUDAGE, DISPOSITIF DE SOUDAGE ET MÉTHODE DE SOUDAGE

(30) Priorität: 21.01.2010 DE 102010005357
(43) Veröffentlichungstag der Anmeldung: 28.11.2012
(73) Patentinhaber: ThyssenKrupp System Engineering GmbH, 74076 Heilbronn (DE)
(72) Erfinder: CORNELIUS, Peter, 54317 Kasel (DE); HUSNER, Jens, 66687 Wadern (DE); LEIDINGER, Stefan, 66839 Schmelz (DE); NICOLAUS, Florian, 66687 Wadern (DE)
(74) Vertreter: Kirchner, Sven
(86) Internationale Anmeldenummer: PCT/EP2010/007411
(87) Internationale Veröffentlichungsnummer: WO 2011/088866

(56) Entgegenhaltungen:
- US-A- 6 037 558

## Beschreibung

Die Erfindung betrifft eine Schweißelektrodeneinheit gemäß dem Oberbegriff des Patentanspruchs 1, eine Vorrichtung (Falzflanschschweißvorrichtung) zum Falzen und zum randseitigen stoffschlüssigen Verbinden von Blechen mit einer Schweißelektrodeneinheit gemäß dem Patentanspruch 1, und ein Verfahren zum Erzeugen einer Schweißverbindung. Die erfindungsgemäße Schweißelektrodeneinheit dient der Herstellung einer stoffschlüssigen Verbindung (ggf. unter Verwendung eines zwischen den Blechen befindlichen Klebstoffs) durch welche wenigstens zwei Blechteile relativ zueinander fixiert werden. Mit Vorteil sind die zu verbindenden Bleche vor Herstellung der stoffschlüssigen Verbindung bereits mittels einer formschlüssigen Verbindung in Form einer Falzverbindung miteinander (vor-)verbunden bzw. zueinander vorpositioniert. Die stoffschlüssige Verbindung erfolgt anschließend mittels einer Schweißverbindung, durch die ein bereichsweises Verschmelzen der zu verbindenden Bleche in einem vorbestimmten Schweißpunkt realisiert wird. Durch die hergestellte Schweißverbindung werden die Bleche für den weiteren Verarbeitungsprozess zueinander fixiert (in Position gehalten). Die erfindungsgemäße Schweißelektrodeneinheit kann dabei sowohl beim so genannten Buckelschweißen, bei dem zwei Bleche unter Einschluss einer Verprägung von zumindest einem der Blechteile zueinander positioniert und fixiert werden, als auch für ein Verschweißen der Blechteile ohne eine derartige Verprägung - also bei Verschweißung der Bleche bei vollflächigem Kontakt derselben im Überlappungsbereich - Anwendung finden.

Aus dem Stand der Technik sind bereits eine Vielzahl von Vorrichtungen und Verfahren zum Herstellen von Fixierungsverbindungen (Verbindungen zur vorläufigen Positionierung zwecks prozessual nachgelagerter Weiterverarbeitung der vorpositionierten Blechteile) bekannt. Keine der bekannten Fixierungsverbindungen (vorläufigen Schweißverbindungen) kann bei Gewährleistung einer bestimmten Oberflächenqualität eine definierte Festigkeit durch Herstellen einer Schweißlinse (stoffschlüssige Verbindung bei der der Grundwerkstoff der zu verbindenden Teile beidseitig aufgeschmolzen ist) gewährleisten, insbesondere eine Festigkeit die die Anforderungen crash-sicherer Schweißverbindungen in Anlehnung an DVS-Richtlinie Nr. 2902 und Nr. 2926 (DVS: Deutscher Verband für Schweißen) erfüllt.

So ist aus der WO 2009/135938 A1 ein Verfahren und ein Werkzeug zur Herstellung einer Fixierverbindung an formschlüssig gefügten Bauteilen bekannt, wobei eine linear geführte Schweißelektrode mit einem vorgebbaren Kontaktdruck in einer vorbestimmten Schweißstelle der zu verbindenden Blechanordnung aufgesetzt und anschließend mit einem erhöhten Fügedruck eine entsprechende Schweißung durchgeführt wird. Hierbei wird die Schweißelektrode über eine entsprechende Servoeinheit linear beweglich geführt, wobei ein Kolben der Servoeinheit, zum Ausgleich eines beim Aufschmelzen des Blechmaterials in der Schweißstelle auftretenden Nachsetzwegs, während des Schweißprozesses durch eine Pneumatikeinheit mit Druckgas beaufschlagt ist.

Darüber hinaus wird in der US-A-6 037 558 und in der DE 10 2005 018 520 A1 eine Vorrichtung zum elektrischen Pressschweißen beschrieben. Die hier beschriebene Schweißvorrichtung umfasst eine sogenannte Nachsetzeinrichtung, die eine oder mehrere in Zustellrichtung parallel und/oder in Reihe angeordnete Federelemente aufweist.

Des Weiteren ist aus dem Stand der Technik gemäß der DE 89 10 447 U1 eine Abstützvorrichtung für Schweißelektroden bekannt, wodurch ebenfalls gewährleistet werden soll, dass die Schweißelektrode dem durch die Schweißschmelze nachgebenden Werkstück um einen entsprechenden Nachsetzweg zeitnah folgen kann. Hierfür ist zwischen einem entsprechenden Träger, welcher mittels einer Servoeinrichtung verstellbar ist und einem die Elektrode aufnehmenden Elektrodenhalter ein elastisches Zwischenglied in Form eines Druckluftzylinders eingesetzt, welcher in seiner axialen Länge verstellbar ist. In Abhängigkeit von dem im Druckraum herrschenden Druck, welcher über eine externe gekoppelte Druckquelle eingestellt wird, kann somit der Schweißdruck der Elektrode an die jeweiligen Erfordernisse angepasst bzw. gemessen werden.

Bei den zuvor beschriebenen Schweißvorrichtungen soll durch die entsprechende federbewegliche Lagerung der Schweißelektrode ein sicheres Nachsetzen der Schweißelektrode - für die Fälle, in denen das Werkstückmaterial in der Fügezone in einen teigigen Zustand übergeht (und örtlich durch die eindringende Schweißelektrode verdrängt wird) - sichergestellt werden. In Versuchsreihen hat sich gezeigt, dass Schweißeinrichtungen mit derartigen Nachsetzeinrichtungen lediglich Schweißverbindungen realisieren können, die zwar eine sichere Fixierung für die nachträgliche Bearbeitung der verbundenen Blechteile, bei Aufrechterhaltung der geforderten Oberflächenqualität, gewährleisten - Festigkeitsanforderungen, wie sie bei crashsicheren Verbindungen bestehen, aber nicht erfüllt werden können.

Es ist Aufgabe der vorliegenden Erfindung eine Schweißelektrodeneinheit bzw. eine Vorrichtung zum randseitigen stoffschlüssigen Verbinden von Blechen bzw. ein Verfahren zum Erstellen einer Schweißverbindung anzugeben, wodurch eine im Hinblick auf ihre Festigkeit verbesserte Schweißverbindung erreicht werden kann. Zum anderen soll gewährleistet werden, dass trotz der im Hinblick auf die Festigkeit verbesserten Schweißverbindung auf der der Schweißelektrode gegenüber liegenden Seite der Blechverbindung keinerlei durch die Verschweißung erzeugte, erkennbare Oberflächenbeeinträchtigungen auftreten. Durch die Erfindung soll demnach eine Schweißqualität mit erhöhter Festigkeit der Schweißstelle als auch eine Sichtpunktqualität (Oberflächenqualität), wie sie beispielsweise von Automobilherstellern gefordert wird, gewährleistet werden.

Erfindungsgemäß wird diese Aufgabe jeweils durch die Gesamtheit der Merkmale der unabhängigen Patentansprüche gelöst.

Gemäß der Erfindung wird eine Schweißelektrodeneinheit, insbesondere eine Schweißelektrodeneinheit zum Verschweißen gefalzter Karosseriebleche einer Fahrzeugkarosserie bzw. eines Fahrzeugkarosserieelementes vorgeschlagen, welche eine Nachsetzeinrichtung und eine mit der Nachsetzeinrichtung kinematisch wirkverbundene Schweißelektrode umfasst, wobei die Nachsetzeinrichtung derart ausgebildet ist, dass die Schweißelektrode - insbesondere relativ zu einer Befestigungsstelle, über die die Schweißelektrodeneinheit an einer Trägereinrichtung befestigbar ist (bzw. relativ zu dem Gehäuse, in das die Nachsetzeinrichtung integriert ist) - linear bewegbar ist. Dabei weist die Nachsetzeinrichtung ein Kraftspeichermittel auf, über welches die Schweißelektrode während des Schweißbetriebs bzw. während des Kontaktes zu einer entsprechenden Schweißstelle mit einer/einem vorbestimmten (mit Vorteil konstanten insbesondere einstellbaren) Kraft bzw. Druck beaufschlagbar ist. Dabei ist das Kraftspeichermittel über ein Betätigungselement (auch als Trenn- und Koppelelement bezeichnet) von der Kraft- bzw. Druckquelle wirkungsmäßig entkoppelbar (kraft- bzw. druckmäßig trennbar). Durch die erfindungsgemäße Entkoppelung des vorgespannten Kraftspeichermittels von der Kraftquelle wird ein Schweißvorgang ermöglicht, während dessen gesamter Schweißdauer die Schweißelektrode mit einer im Wesentlichen konstanten Kraft bzw. mit einem i.W. konstanten Druck (Abweichung kleiner/gleich fünf Prozent der einzustellenden Sollgröße) auf die entsprechende Schweißstelle einwirkt. Hierdurch wird ein bei einem Schweißprozess systembedingt auftretendes Aufschmelzen des Blechmaterials im Bereich der Schweißstelle und ein damit einhergehendes auftretendes Nachgeben des Materials (wegmäßig) über die Nachsetzeinrichtung ausgeglichen. Der (Weg-)Ausgleich bzw. die Nachsetzbewegung der Schweißelektrode erfolgt dadurch ohne dass durch Rückkoppelungen zu und/oder aus der Kraftquelle entsprechende Schwingungen auf das Kraftspeichermittel und damit auf die angedrückte Schweißelektrode auftreten bzw. wirken können. Die tatsächliche Nachsetzbewegung während des Schweißvorgangs wird aufgrund der realisierten Entkoppelung damit ausschließlich durch das bzw. aus dem Kraftspeichermittel bewirkt. Hierdurch wird eine deutlich erhöhte Schweißqualität im Vergleich zum Stand der Technik erreicht.

Mit Vorteil ist das Kraftspeichermittel derart ausgebildet, dass es über seinen gesamten schweißrelevanten Wirkungsbereich, also über den Bereich der während des Schweißvorganges als Nachsetzweg (aus der Nachsetzbewegung resultierender Weg der Schweißelektrodenspitze) ausgeglichen werden muss, einen linearen Kraft-Wegverlauf aufweist. Hierfür ist das Kraftspeichermittel mit Vorteil als Schraubenfeder ausgebildet. Andere Ausführungsformen des Kraftspeichermittels als Elastomer-, Hydraulik- oder Pneumatikspeicher oder entsprechende Kombinationen derselben sind ebenfalls von der Erfindung mit umfasst.

In einer bevorzugten ersten Ausführungsform, die gemäß einer ersten Funktionsweise aufgebaut ist und arbeitet, ist die Schweißelektrodeneinheit durch eine, in einem Gehäuse angeordnete Nachsetzeinrichtung (beispielsweise in Form eines Federkraftspeichers) gebildet, welche über eine hierzu in Serie geschaltete Kolbenzylindereinheit (z.B. Hydraulik- oder Pneumatikzylindereinheit) eine Kolbenstange sowie die hiermit verbundene Schweißelektrode in Wirkrichtung (d.h. in Richtung Schweißstelle) mit einer entsprechenden Federkraft beaufschlagt. Mit Vorteil wird das Kraftspeichermittel bereits bei der Montage vorgespannt im Gehäuse angeordnet, so dass bedingt durch diese Vorspannung der während des Schweißprozesses gewünschte Kontaktdruck zwischen Schweißelektrode und Schweißstelle (Blech) gewährleistet ist.
Ferner kann über die dem Kraftspeicher in Wirkrichtung gesehen nachgelagerte Kolbenzylindereinheit - welche beispielsweise über eine externe Kraftquelle bzw. Druckquelle (z.B. in Form einer Pneumatik- oder Hydraulikquelle, wie Kompressor oder Hydraulikpumpe) mit Druck beaufschlagbar ist - der in dem Zylinder der Kolbenzylindereinheit beweglich geführte Kolben entgegen der Federkraft des vorgespannten Kraftspeichers bewegt werden und die mit der Kolbenstange verbundene Schweißelektrode entgegen der Wirkrichtung (in Richtung von der Schweißstelle weg) zurück in eine definierte Grundstellung bewegt bzw. eingefahren werden. Des Weiteren kann das beispielsweise als Schraubenfeder ausgebildete Kraftspeichermittel durch eine auf die Schraubenfeder wirkende Einstellschraube in der Vorspannung veränderbar voreingestellt (bzw. "feinjustiert") werden. Auf diese Weise wird in der Schweißposition die ausgeübte Schweißkraft auf die Schweißstelle durch die bei der Montage bereits eingestellte Vorspannung des Kraftspeichermittels, durch den verbleibenden Resthub des Kolbens der Kolbenzylindereinheit sowie die durch die Position der Einstellschraube bestimmt. Durch eine (insbesondere mechanische) Verriegelung des Kolbens oder eine Aufrechterhaltung des über die externe Kraftquelle generierten Druckes auf den Kolben kann der Kraftspeicher im druckbeaufschlagten Zustand, und damit die Schweißelektrode in ihrer eingefahrenen Grundstellung, gehalten werden.
Mit Vorteil ist die erfindungsgemäße Schweißelektrodeneinheit mit einer in Grundstellung befindlichen Schweißelektrode in einer vordefinierten Grundposition mit der Spitze der Schweißelektrode in einem definierten Abstand zu einer gewünschten Schweißstelle positioniert, so dass die Schweißstelle durch alleinige lineare (ausfahrende) Bewegung der Schweißelektrode (mit Vorteil orthogonal auf die Schweißstelle auftreffend) kontaktiert werden kann. Die Bewegung in diese vordefinierte Grundposition kann beispielsweise über einen Arbeitsroboter erfolgen. In einer bevorzugten Ausführungsform erfolgt die Einstellung in die definierte Grundposition in dem die mit Vorteil ortsfest am Niederhalter einer entsprechenden Falzvorrichtung befestigte Schweißelektrodeneinheit gemeinsam mit dem Niederhalter bewegt wird, so dass die "vorgespannte" und in Grundstellung eingefahrene Schweißelektrode durch Schließen des Niederhalters automatisch in der definierten Grundposition positioniert wird. Durch Druckfreischaltung der Kolbenzylindereinheit kann der Kolben und damit die Schweißelektrode aus der eingefahrenen Grundstellung in eine Schweißstellung (mit ausgefahrener, die Schweißstelle kontaktierender Schweißelektrode) überführt werden. Indem die Kolbenzylindereinheit druckfrei geschaltet wird, wird eine Entkoppelung von auf die Schweißelektrode wirkendem Kraftspeichermittel und der das System in Grundstellung mit Druck versorgenden Kraftquelle realisiert. Die in der Schweißstellung auf die Schweißstelle wirkende Vorspannung (Schweißvorspannung) wird damit im Wesentlichen durch die montageseitig bereits vorgespannte und ggf. über die Einstellschraube feinjustierte Vorspannung des Kraftspeichermittels bewirkt. Auf diese Ausführungsform wird bei der nachfolgenden Figurenbeschreibung eines Ausführungsbeispiels ausführlich Bezug genommen.

In einer alternativen Ausführungsform der Schweißelektrodeneinheit, die gemäß einer zweiten Funktionsweise aufgebaut ist und arbeitet, ist das Kraftspeichermittel ebenfalls durch ein Federelement gebildet. Dabei ist das Federelement zwischen einem in einer Druckkammer mit einem einstellbaren Druck beaufschalgbaren, frei beweglich geführten Kolben und der mit der Schweißelektrode bzw. mit deren Träger gekoppelten (Antriebs-)Kolbenstange angeordnet.
Gemäß dieser zweiten Ausführungsform und Wirkungsweise wird innerhalb eines Gehäuses ein mehrkammeriges Drucksystem mit zumindest zwei in unterschiedlichen Gehäuseteilen bewegbaren Trennkolben realisiert. Die beiden Gehäuseteile sind dabei über einen gesteuert verschließbaren Verbindungskanal drucktechnisch koppelbar bzw. entkoppelbar. In einem ersten (oberen) Gehäuseteil ist dabei ein erster Trennkolben freibeweglich angeordnet und über eine (externe) Kraftquelle in Form eines Kompressors o.d. mit einem einstellbaren Druck (von oben, in Ausfahrrichtung der Kolbenstange) baufschlagbar. In einem zweiten (unteren) Gehäuseteil, der dem ersten Gehäuseteil in Wirkrichtung gesehen nachgelagert ist und mit diesem über einen gesteuert verschließbaren Verbindungskanal hydraulisch wirkverbunden ist, ist ein zweiter Trennkolben freibeweglich angeordnet und von seiner dem ersten Trennkolben abgekehrten Kolbenseite (von unten, entgegen der Ausfahrrichtung der Kolbenstange) ebenfalls über eine bzw. die Kraftquelle mit einem Druck beaufschlagbar. Die beidseitig des Verbindungskanals in den beiden Gehäuseteilen angeordneten Trennkolben schließen zwischen sich einen koppelnden (die beiden Trennkolben bei geöffnetem Verbindungskanal wirkungstechnisch verbindenden) Druckraum ein. Dabei ist in dem zwischen den beiden Trennkolben gebildeten Druckraum ein koppelnd wirkendes inkompressibles Druckmedium (Hydraulikmittel) vorgesehen, so dass durch Druckbeaufschlagung des ersten Trennkolbens über das Hydraulikmittel und den zweiten Trennkolben eine Vorspannung des zwischen zweitem Kolben und der mit der Schweißelektrode verbundenen Kolbenstange angeordneten Kraftspeichermittels einstellbar ist.
Der genaue Aufbau dieser Ausführungsform in verschiedenen Modifikationen wird nachfolgend ebenfalls in der Figurenbeschreibung erläutert.

Funktional betrachtet, weist die zweite Ausführungsform im Gegensatz zur ersten beschriebenen Ausführungsform den Unterschied auf, dass die Schweißelektrodeneinheit bzw. deren Kraftspeichermittel erst dann definiert vorgespannt wird, wenn die Schweißelektrodeneinheit aus einer definierten Grundposition - in der die Schweißelektrodenspitze (Wirkfläche der Schweißelektrode) in einem definierten Abstand zur Schweißstelle positioniert ist - in eine Schweißposition verfahren ist, in der sie mit ihrer Schweißelektrodenspitze im vorbestimmten Schweißpunkt das als Widerlager für den Vorspannvorgang dienende Blechteil kontaktiert. Demgegenüber ist die Schweißelektrodeneinheit gemäß der ersten Ausführungsform zur Bereitstellung eines vorbestimmten Schweiß- bzw. Kontaktdruckes ohne externes separates Widerlager bereits konstruktionsbedingt während der Montage in ein Gehäuse entsprechend vorgespannt. Im Betrieb der Schweißelektrodeneinheit kann durch Druckbeaufschlagung der Kolbenzylindereinheit das Kraftspeichermittel nochmals um eine definierte Wegstrecke zusammengedrückt und so die Schweißelektrode in eine definierte eingefahrene Grundstellung überführt werden, sodass die Schweißelektrode nach einer Entriegelung der Kolbenzylindereinheit (Druckfreischaltung der Kolbenzylindereinheit) in die Schweißposition überführt und dort unter Aufrechterhaltung eines definierten Druckes die Schweißstelle kontaktiert.

Des Weiteren umfasst die Erfindung eine Vorrichtung (Falzflanschschweißvorrichtung bzw. Falzflanschvorrichtung mit Schweißvorrichtung) zum randseitigen stoffschlüssigen Verbinden von Blechen, insbesondere Karosserieblechen einer Kraftfahrzeugkarosserie. Diese Vorrichtung ist als sog. Falzflanschschweißvorrichtung ausgeführt, umfassend ein Falzbett zur Aufnahme von zumindest zwei Karosserieblechen, einen bewegbaren Niederhalter über den in einer aktiven Betriebsposition die im Falzbett liegenden Bleche (unter unmittelbarem Kontakt von zumindest einem der beiden Bleche) in Richtung Falzbett gedrückt und positioniert gehalten werden können. Des Weiteren ist mindestens ein thermisches Fügewerkzeug in Form der bereits vorstehend beschriebenen Schweißelektrodeneinheit vorhanden. In einer besonders bevorzugten Ausführungsform der Vorrichtung ist die Schweißelektrodeneinheit mit Vorteil ortsfest am Niederhalter der Falzflanschschweißvorrichtung befestigt. Alternativ kann die Schweißelektrodeneinheit aber auch an eine separate Robotereinrichtung bzw. einen im Raum beweglichen Aktor angebunden sein und über diese(n) in eine entsprechende Grundposition in einem definierten Abstand (bzw. in einer definierten Position) zum entsprechenden Schweißpunkt bzw. zur entsprechenden Schweißstelle bewegt werden.

In einer anderen Weiterbildung der Vorrichtung ist eine Mehrzahl von Schweißelektrodeneinheiten vorhanden, insbesondere eine Mehrzahl von Schweißelektrodeneinheiten am Niederhalter befestigt, wobei zumindest zwei der Schweißelektrodeneinheiten eine gemeinsame zentrale Masseanbindung aufweisen. Diese zentrale Masseanbindung wird mit Vorteil über eine als Klemme gebildete Masseklemme zur klemmenden Befestigung an einem der beiden zu verbindenden Blechteile ausgebildet. Dabei kann die Masseklemme ortsfest am Niederhalter angebunden sein, sodass bei Zufahren des Niederhalters in Richtung Falzbett die Masseklemme mit ihrem oberen, dem Niederhalter zugewandten Klemmenkontakt auf das zu kontaktierende Blech drückt bzw. dieses kontaktiert und mit ihrem zweiten korrespondierenden Massearm durch eine Öffnung hindurchgreift und im niedergefahren Zustand des Niederhalters dieser korrespondierende Klemmenarm zugeschwenkt bzw. zugefahren wird. Alternativ kann die Masseklemme als solche nicht ortsfest sondern auch in ihrer Gesamtheit bewegbar am Niederhalter angebunden sein.

Schließlich umfasst die Erfindung ein Verfahren zur Erzeugung einer Schweißverbindung (insbesondere einer Schweißverbindung einer Falzflanschverbindung zweier Blechteile) unter Einsatz der vorstehend beschriebenen Schweißelektrodeneinheit, wobei vor einer Bestromung der Schweißelektrode das Kraftspeichermittel über eine Spanneinrichtung definiert vorgespannt wird oder eine Schweißelektrodeneinheit mit einem entsprechend vorgespannten Kraftspeichermittel bereitgestellt wird, und durch Aktivierung des Trenn- und Koppelelements, unter Beibehaltung des vorgespannten Zustands, von der Kraftquelle wirkungsmäßig (kraft- bzw. druckmäßig) entkoppelt wird.

Die Erfindung wird nachfolgend anhand von Zeichnungsfiguren für zwei verschiedene Ausführungsbeispiele dargestellt und näher erläutert. Es zeigen:
- Fig. 1: eine erste, nach einem ersten Wirkprinzip arbeitende, mögliche Ausführungsform der erfindungsgemäßen Schweißelektrodeneinheit in Schnittdarstellung - dargestellt in einer definierten Grundposition, in der die Schweißelektrode in einem definierten Abstand zur Schweißstelle positioniert ist,
- Fig. 2: die Schweißelektrodeneinheit gemäß Fig. 1 in einer Schweißposition mit ausgefahrener schweißbereiter Schweißelektrode,
- Fig. 3: eine zweite, nach einem zweiten Wirkprinzip arbeitende, mögliche Ausführungsform der erfindungsgemäßen Schweißelektrodeneinheit in Schnittdarstellung - dargestellt in einer definierten Grundposition, in der die Schweißelektrode in einem definierten Abstand zur Schweißstelle positioniert ist,
- Fig. 4: die Schweißelektrodeneinheit gemäß Fig. 3 in einer Schweißposition mit ausgefahrener Schweißelektrode und nicht vorgespanntem Kraftspeichermittel,
- Fig. 5: die Schweißelektrodeneinheit gemäß Fig. 3 in Schweißposition mit ausgefahrener Schweißelektrode und vorgespanntem Kraftspeichermittel,
- Fig. 6: eine dritte, nach dem zweiten Wirkprinzip arbeitende, mögliche Ausführungsform der erfindungsgemäßen Schweißelektrodeneinheit in Schnittdarstellung - dargestellt in einer definierten Grundposition, in der die Schweißelektrode in einem definierten Abstand zur Schweißstelle positioniert ist,
- Fig. 7: die Schweißelektrodeneinheit gemäß Fig. 6 in einer Schweißposition mit ausgefahrener Schweißelektrode und nicht vorgespanntem Kraftspeichermittel,
- Fig. 8: die Schweißelektrodeneinheit gemäß Fig. 6 in Schweißposition mit ausgefahrener Schweißelektrode und vorgespanntem Kraftspeichermittel,
- Fig. 9: eine vierte, nach dem zweiten Wirkprinzip arbeitende, mögliche Ausführungsform der erfindungsgemäßen Schweißelektrodeneinheit in Schnittdarstellung - dargestellt in einer definierten Grundposition, in der die Schweißelektrode in einem definierten Abstand zur Schweißstelle positioniert ist,
- Fig. 10: die Schweißelektrodeneinheit gemäß Fig. 9 in einer Schweißposition mit ausgefahrener Schweißelektrode und nicht vorgespanntem Kraftspeichermittel,
- Fig. 11: die Schweißelektrodeneinheit gemäß Fig. 9 in Schweißposition mit ausgefahrener Schweißelektrode und vorgespanntem Kraftspeichermittel,
- Fig. 12: eine erfindungsgemäße Vorrichtung in einer möglichen Ausführungsform, mit an einem Niederhalter angebundenen Schweißelektrodeneinheiten in einer schematischen perspektivischen Darstellung,
- Fig. 13: eine Teilschnittdarstellung der Vorrichtung gemäß Fig. 12 entlang der Schnittlinie A-A, und

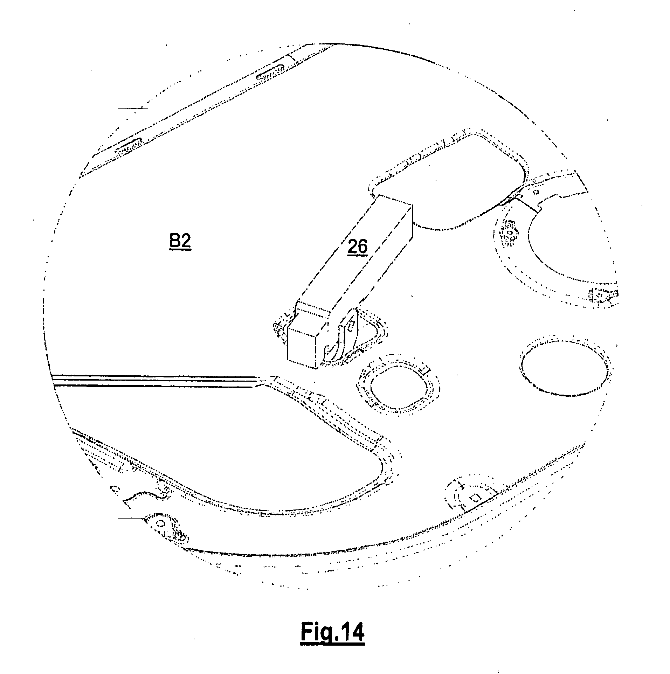

- Fig. 14: eine Detaildarstellung gemäß den Fig. 12 und 13, in der die zentrale Masseanbindung in Form einer Masseklemme, angeklemmt an eines der beiden in der Vorrichtung gemäß Figur 6 gehaltenen Bleche, dargestellt ist.

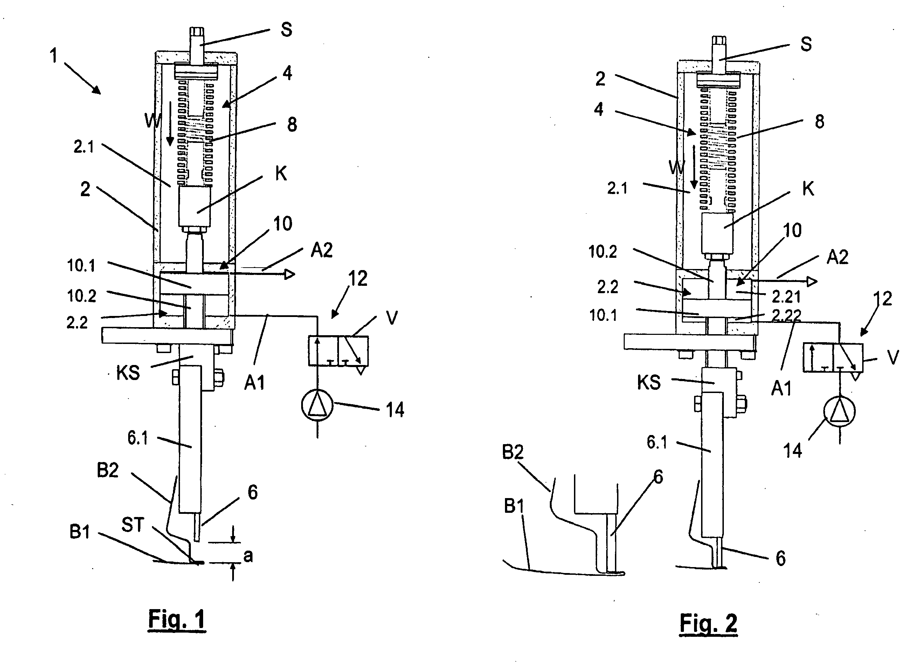

In den Figuren 1 und 2 ist eine erste Ausführungsform der erfindungsgemäßen Schweißelektrodeneinheit 1 in ihrem Aufbau schematisch in einer Schnittdarstellung im Längsschnitt gezeigt, wobei gemäß Fig. 1 die Schweißelektrodeneinheit 1 in einer definierten Grundposition, in der die Schweißelektrode 6 (im eingefahrenen Zustand - Grundstellung) in einem definierten Abstand a zu einer Schweißstelle ST positioniert ist, dargestellt ist. Die Schweißelektrodeneinheit 1 umfasst im Wesentlichen ein Gehäuse 2, eine innerhalb des Gehäuses 2 angeordnete Nachsetzeinrichtung 4 sowie eine mit der Nachsetzeinrichtung 4 kinematisch verbundene Schweißelektrode 6. Die Nachsetzeinrichtung 4 ist derart ausgebildet, dass die Schweißelektrode 6 relativ zum Gehäuse 2 (bzw. relativ zu der Befestigungsstelle der Schweißelektrodeneinheit 1 an einem Träger) linear beweglich ist. Die Nachsetzeinrichtung 4 weist ein Kraftspeichermittel 8 auf, über welches die Schweißelektrode 6 während des Schweißbetriebs bzw. während des Kontaktes zur Schweißstelle ST mit einer vorbestimmten, mit Vorteil konstanten und insbesondere einstellbaren Kraft beaufschlagbar ist. Die Nachsetzeinrichtung 4 umfasst im dargestellten Ausführungsbeispiel optional eine Einstellschraube S zur Feinjustage des beispielsweise als Schraubenfeder ausgeführten und bei der Montage ins Gehäuse 2 bereits vorgespannten Kraftspeichermittels 8 sowie ein Koppelelement K, welches beispielsweise auch eine Kraftmesseinrichtung in Form eines Dehnungsmessstreifens, eines Piezoelements oder dergleichen enthalten kann. Alternativ kann das Kraftspeichermittel 8 auch durch eine in ihrer Vorspannung nicht einstellbare Schraubenfeder - also ohne auf die Schraubenfeder einwirkende Einstellschraube S - ausgebildet sein. Durch die Einstellschraube S und/oder den Tausch der Schraubenfeder mit anderer Federkonstante kann auf einfache Weise eine Anpassung des Kraftspeichermittels 8 an die zu schweißende Verbindung bzw. an die zu verschweißenden Bleichteile (z.B. Blechteile unterschiedlicher Dicken) realisiert werden. Unabhängig von der montageseitig eingestellten Vorspannung des Kraftspeichermittels 8 und der über die Einstellschraube S möglichen Feinjustage der Schraubenfedervorspannung ist die Schraubenfeder über eine ins Gehäuse 2 integrierte Rückstelleinrichtung 10 (welche im dargestellten Ausführungsbeispiel durch eine pneumatische Kolbenzylindereinheit gebildet ist) spannbar, so dass die mit der Rückstelleinrichtung 10 (bzw. mit dem Kolben bzw. der Kolbenstange der Kolbenzylindereinheit) verbundene Schweißelektrode 6 aus der ausgefahrenen Schweißposition in die (zurück) eingefahrene Grundposition überführbar ist. Im eingefahrenen Zustand der Schweißelektrode 6 (Grundstellung), der dadurch erreicht werden kann, dass die pneumatische Kolbenzylindereinheit einseitig (von unten, gegen die Wirkrichtung W des Kraftspeichermittels 8) mit einem Druck beaufschlagt wird, kann die Rückstelleinrichtung 10 über ein Betätigungselement 12 von einer die Rückstelleinrichtung 10 versorgenden - und damit mit dem Kraftspeichermittel 8 wirkungsmäßig gekoppelten - Kraftquelle 14 (bzw. Druckquelle) wirkungsmäßig entkoppelt werden. Im dargestellten Ausführungsbeispiel ist die versorgende Kraftquelle 14 durch eine Kompressoreinheit gebildet, welche über ein 2/4-Wege-Schaltventil V die Rückstelleinrichtung 10 entgegen ihrer Wirkrichtung über einen ersten gehäuseseitigen Druckmittelanschluss A1 mit Druck beaufschlagen kann. Gemäß dem dargestellten Ausführungsbeispiel ist das Gehäuse 2 mit zumindest zwei Gehäusekammern ausgeführt, wobei in einem ersten, oberen Gehäuseteil 2.1, das Kraftspeichermittel 8 (in Form der Schraubenfeder) angeordnet ist und in einem zweiten, unteren Gehäuseteil 2.2, die Rückstelleinrichtung 10 (in Form der genannten pneumatischen Kolbenzylindereinheit) angeordnet ist. Die Schraubenfeder und der Kolben der Kolbenzylindereinheit sind dabei wirkungsmäßig seriell hintereinander geschaltet und im dargestellten Ausführungsbeispiel über das Koppelelement K verbunden. Die pneumatische Kolbenzylindereinheit weist einen im unteren Gehäuseteil 2.2 beweglichen, den unteren Gehäuseteil 2.2 in zwei einzelne Teilgehäuseteile (bzw. Druckräume) 2.21 und 2.22 aufteilenden, Kolben 10.1 sowie eine mit dem Kolben 10.1 verbundene Kolbenstange 10.2 auf. Dabei durchragt die Kolbenstange 10.2 sowohl den Boden als auch den Deckel des unteren Gehäuseteils 2.2 durch entsprechende Durchführöffnungen, um zum einen nach unten einen Anschluss für die Schweißelektrode 6 bzw. deren Elektrodenhalter 6.1 bereit zu stellen, und um nach oben eine Kopplung mit dem Kraftspeichermittel 8 zu gewährleisten. Im dargestellten Ausführungsbeispiel ist die Schweißelektrode 6 an dem Elektrodenhalter 6.1 angebracht, der über ein isoliertes bzw. elektrisch isolierend wirkendes Koppelstück KS an die Kolbenstange 10.2 angebunden ist. Dabei kann über eine Schraubverbindung zwischen Schweißelektrodenhalter 6.1 und Koppelstück KS auch die elektrische Versorgung der Schweißelektrode 6 erfolgen.

In Fig. 1 ist die Schweißelektrodeneinheit 1 in der eingangs beschriebenen Grundposition gezeigt, wobei das Schaltventil V sich in einer Schaltstellung befindet, in der der Kolben 10.1 der Kolbenzylindereinheit über den ersten gehäuseseitigen Druckmittelanschluss A1 im unteren Teilgehäuseteil 2.22 des zweiten Gehäuseteils 2.2 (von unten) mit einem Druck beaufschlagt, so dass der Kolben 10.1 in seine obere Endposition verfährt bzw. verfahren gehalten ist. Das Kraftspeichermittel 8 bzw. die Schraubenfeder ist somit zusätzlich zur montagebedingten Vorspannung weiter zusammendrückt und die mit der Kolbenstange 10.2 verbundene Schweißelektrode 6 in ihre Grundstellung zurück eingefahren. Um eine kontrollierte Verfahrbarkeit des Kolbens 10.1 zu gewährleisten, ist im oberen Teilgehäuseteil 2.21 des unteren Gehäuseteils 2.2 ein zweiter Druckmittelanschluss A2 zur kontrollierten Entlüftung des Druckraums vorgesehen. Dabei ist der zweite Druckmittelanschluss A2 (mit Vorteil beide Druckmittelanschlüsse A1, A2) vorzugsweise mit einem einstellbaren Dämpfungsventil ausgestattet. Dabei ist eine eingestellte Dämpfung insbesondere während der Zustellbewegung in Richtung Schweißstelle ST aktiv - während des Schweißvorganges wird die Dämpfung aufgehoben und die Drossel vollständig geöffnet.

Die in Figur 1 dargestellte Position ist die sogenannte definierte Grundposition, in der die Schweißelektrodeneinheit 1 (in Grundstellung eingefahren) mit ihrer Schweißelektrode 6 in einem definierten Abstand a von der Schweißstelle ST beabstandet ist. Die Schweißelektrodeneinheit 1 wird durch Aufrechterhaltung des Druckes über die versorgende Kraftquelle 14 in besagter Grundposition bzw. Grundstellung gehalten bis der Schweißvorgang gestartet bzw. eingeleitet wird.

In Fig. 2 ist die Schweißelektrodeneinheit 1 im schweißbereiten Zustand (Schweißposition) gezeigt. Ausgehend von der in Figur 1 dargestellten Grundposition, mit vorgespanntem Kraftspeichermittel 8 und in Grundstellung eingefahrener Schweißelektrode 6, wird das Kraftspeichermittel 8 durch Umschaltung des als Trenn- und Koppelelement 12 fungierenden Schaltventils V von dem Kraftspeicher 14 getrennt (entkoppelt), sodass der Kolben 10.1 der Kolbenzylindereinheit nunmehr beidseitig drucklos geschaltet ist und das Kraftspeichermittel 8 - ohne ein- bzw. rückkoppelnde Wirkungen durch die Kraftquelle 14 - auf die Schweißelektrode 6 bzw. deren Elektrodenträger 6.1 wirkt. In diesem Zustand beaufschlagt die Schweißelektrodeneinheit 1 über ihre druckbeaufschlagte Schweißelektrode 6 die Schweißstelle ST der Blechanordnung der beiden zu verbindenden Blechteile B1, B2 mit einem über das vorgespannte Kraftspeichermittel 8 voreingestellten konstanten Druck. Dieser Druck kann während der gesamten Schweißdauer bzw. des kompletten Schweißprozesses sehr genau konstant aufrechterhalten werden, da die Rückstelleinrichtung 10 und damit das mit diesem wirkverbundene Kraftspeichermittel 8 in diesem Zustand von der Kraftquelle 14 druckmäßig vollständig entkoppelt sind. In diesem Zustand ist der Zylinderraum der pneumatischen Kolbenzylindereinheit bzw. der untere Gehäuseteil 2.2 gänzlich drucklos geschaltet, wobei der Kolben 10.1 noch einen definierten Resthub vor Erreichen seiner unteren Endposition aufweist, der wegmäßig derart bemessen ist, dass die geringen Wegänderungen der Schweißelektrode 6 in Wirkrichtung auf die Schweißstelle ST bei Aufschmelzen der Blechbestandteile im Schweißpunkt ST ausgeglichen werden können. Durch die Entkopplung von der versorgenden Kraftquelle 14 werden entsprechende Schwingungen im System und damit auftretende Gegenkräfte vermieden, sodass ein schnellstmögliches Nachsetzen der Schweißelektrode 6 bei Aufrechterhaltung eines präzisen Druckniveaus ermöglicht wird. Die Nachsetzbewegung der Schweißelektrode 6 wird dabei ausschließlich aus dem bzw. durch das Kraftspeichermittel 8 bewirkt. Die Detailansicht in Figur 2, in der die Schweißelektrode 6 in der Schweißstelle ST die Blechanordnung kontaktiert, soll die Falzflanschverbindung der beiden Bleche B1 und B2 verdeutlichen. Dabei ist ein beispielsweise als Türaußenblech ausgestaltetes erstes Blech B1 umgebördelt und in den Bereich der Umbördelung ein beispielsweise als Türinnenblech ausgeführtes zweites Blech B2 mit seinem Blechrand in der Umbördelung des ersten Bleches B1 eingelegt und über eine Falzflanschverbindung bereits (formschlüsig) vorverbunden.

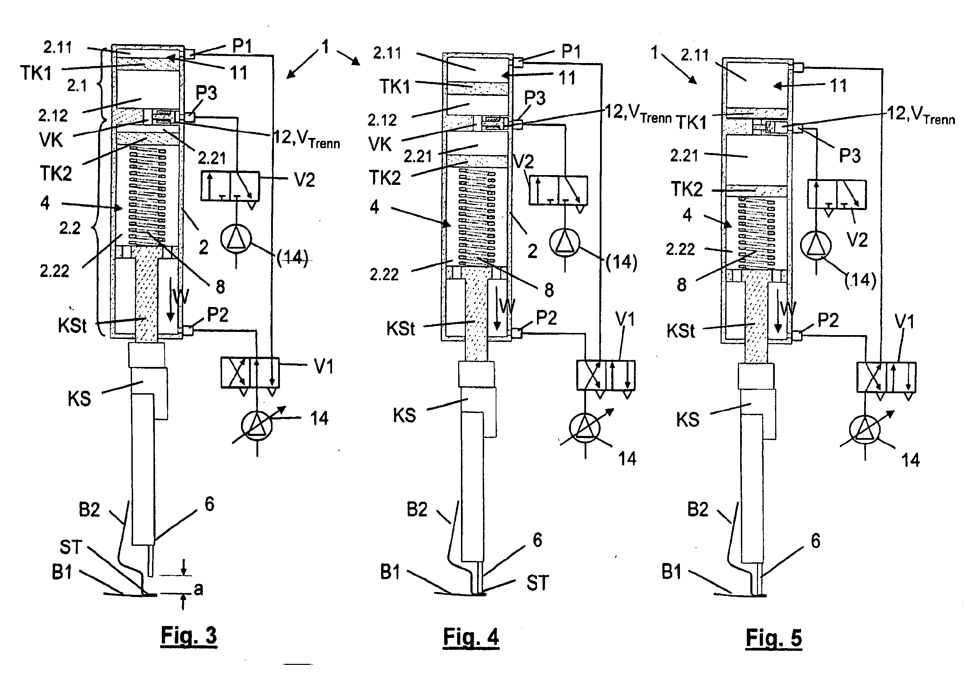

Die Fig. 3 bis 5, 6 bis 8 und 9 bis 11 zeigen jeweils eine Schweißelektrodeneinheit 1 in einer weiteren möglichen Ausführungsform (als hydropneumatisch-mechanische Einheit) in einer schematischen Schnittdarstellung im Längsschnitt, in unterschiedlichen Betriebspositionen. Diese drei weiteren Ausführungsformen arbeiten alle nach einem anderen Funktionsprinzip als es gemäß den Figuren 1 und 2 beschrieben worden ist. Gleiche bzw. gleichwirkende Teile wurden jedoch weitestgehend mit gleichen Bezugszeichen wie in der ersten Ausführungsform bezeichnet.

In den Figuren 3, 6 und 9 ist die Schweißelektrodeneinheit 1 jeweils in einer Betriebsposition dargestellt, in der das Kraftspeichermittel 8 nicht vorgespannt und die Schweißelektrode 6 in einer Grundposition, in einem definierten Abstand a zur Schweißstelle ST beabstandet, positioniert ist. In den Figuren Fig. 4, 7 und 10 ist die Schweißelektrodeneinheit 1 jeweils in einer Betriebsposition dargestellt, in der das Kraftspeichermittel 8 nicht vorgespannt und die Schweißelektrode 6 in einer Schweißposition, in Kontakt stehend mit der Schweißstelle ST, positioniert ist. Gemäß den Figuren 5, 8 und 11 ist die Schweißelektrodeneinheit 1 jeweils in einer schweißbereiten Betriebsposition dargestellt, in der die Schweißelektrode 6 in der Schweißstelle ST aufgesetzt und das Kraftspeichermittel 8 gegen die Schweißstelle ST vorgespannt (Schweißposition) und von der Kraftquelle 14 entkoppelt ist.

Ausgehend von der in Figur 3, 6 bzw. 9 jeweils dargestellten Grundposition, in der die Schweißelektrode 6 angehoben und in einem vorbestimmten Abstand a beabstandet von der Schweißstelle ST dargestellt ist, wird die Schweißelektrode 6 für die Einleitung eines Schweißvorgangs abgesenkt, bis die Schweißelektrode 6 mit ihrer Spitze die Schweißstelle ST kontaktiert. Erst nach Kontaktierung der Schweißstelle ST (dargestellt in Figur 4, 7 bzw. 10) wird das Kraftspeichermittel 8 (über die Schweißelektrode 6, gegen die Schweißstelle ST) vorgespannt bis eine gewünschte Kraft bzw. ein gewünschter Druck erreicht ist und dann von der Kraftquelle 14 entkoppelt (dargestellt in Figur 5, 8 bzw. 11). Unter Aufrechterhaltung dieses Druckes kann die Schweißelektrode 6 bestromt und die Verschweißung der Blechteile (B1, B2) durchgeführt werden.

Im dargestellten Ausführungsbeispiel gemäß Figur 3 umfasst die Schweißelektrodeneinheit 1 ein Gehäuse 2 mit ebenfalls insgesamt zwei Gehäuseteilen, wobei in einem oberen, ersten Gehäuseteil 2.1 dieses durch einen ersten Trennkolben TK1 in zwei Teilgehäuseteile (bzw. Druckräume) 2.11 und 2.12 aufgeteilt wird. Der untere, zweite Gehäuseteil 2.2 ist durch einen weiteren Trennkolben TK2 ebenfalls in zwei einzelne Teilgehäuseteile (bzw. Druckräume) 2.21, 2.22 aufgeteilt. Die angrenzenden Teilgehäuseteile 2.12 und 2.21 der beiden Gehäuseteile 2.1 und 2.2 sind über einen Verbindungskanal VK miteinander verbunden bzw. verbindbar. Dabei ist der Verbindungskanal VK über ein steuerbares Betätigungselement 12 (Trennventil Vₜᵣₑₙₙ) je nach Ansteuerung freischaltbar bzw. verschließbar. Der weitere Trennkolben TK2 ist auf seiner dem ersten Trennkolben TK1 abgekehrten Seite mit dem auf die Kolbenstange KSt zur Ankoppelung der Schweißelektrode 6 wirkenden Kraftspeichermittel 8 mechanisch verbunden. Im dargestellten Beispiel ist eine Schraubenfeder (Kraftspeichermittel 8) zwischen dem zweiten Trennkolben TK2 und der mit der Schweißelektrode 6 gekoppelten (und im unteren Gehäuseteil 2.2 verschiebbar angeordneten) Kolbenstange KSt angeordnet und mit ihren beiden freien Enden mechanisch an diese angebunden.
Der obere Teilgehäuseteil 2.11 des oberen Gehäuseteils 2.1 als auch der untere Teilgehäuseteil 2.22 weisen jeweils einen gehäuseseitigen pneumatischen Druckmittelanschluss P1 bzw. P2 auf. Dabei sind die Teilgehäuseteile 2.11 und 2.22 über ihre Druckmittelanschlüsse P1 und P2 über ein 2/4-Wege-Schaltventil V1, je nach Schaltposition desselben, wechselseitig von der Kraftquelle 14 mit Druck beaufschlagbar. Die über den Verbindungskanal VK miteinander koppelbaren bzw. drucktechnisch gesteuert verbind- und trennbaren Teilgehäuseteile 2.12 und 2.21 sind mit einem Hydraulikmittel gefüllt.

Die Wirkungsweise dieser zweiten Ausführungsform der erfindungsgemäßen Schweißelektrodeneinheit 1 wird im Folgenden näher beschrieben:

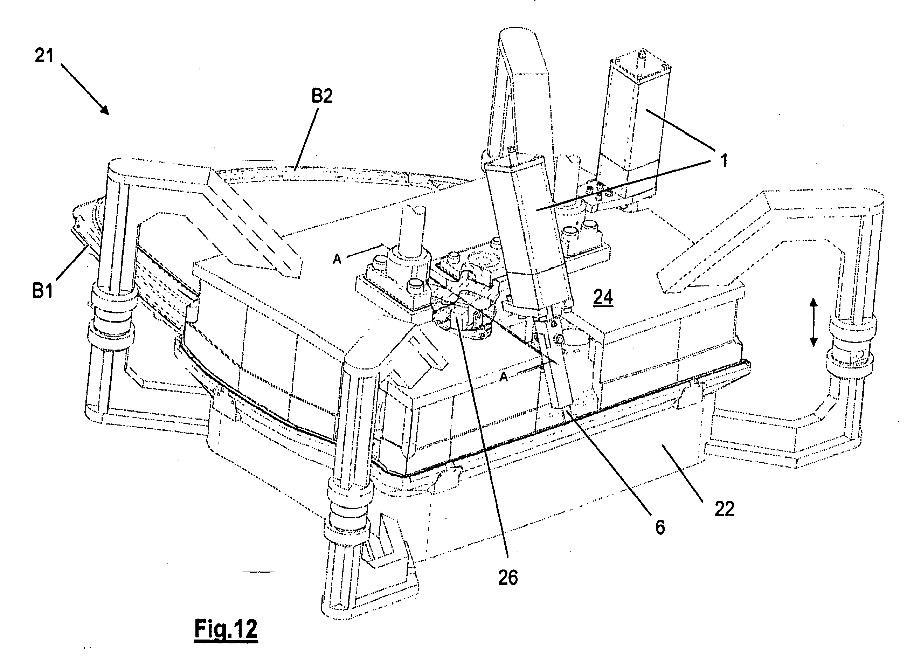

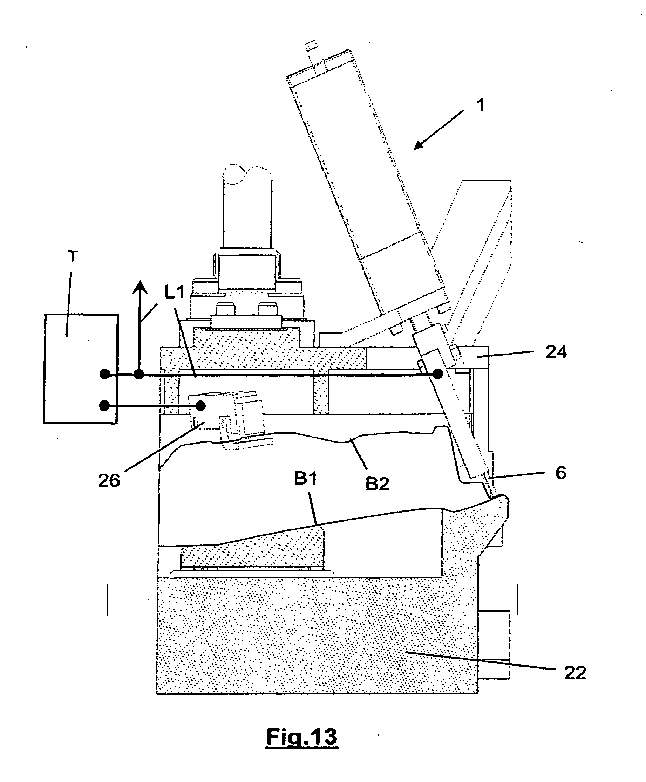

In einer bevorzugten Ausführungsform, wie sie auch gemäß den Fig. 12 und 13 veranschaulicht ist, ist die Schweißelektrodeneinheit 1 ortsfest an einem Niederhalter 24 einer Falzeinrichtung befestigt. Wird der Niederhalter 24 in seine Niederdrückposition überführt - in der die beiden im Falzbett 22 eingelegten Bleche B1 und B2 vorpositioniert gehalten werden, um in dieser Position ein Falzen durch nicht dargestellte Falzbacken zu realisieren -, wird die Schweißelektrode 6 automatisch bzw. zwangsweise mit in die vorbestimmte Grundposition (in der die Spitze der Schweißelektrode 6 in einem definierten Abstand a zum Falzbett 22 oder zum eingelegten zu kontaktierenden Blech B1 positioniert ist) überführt. Diese Grundposition wird zum einen durch die Befestigung der Schweißelektrodeneinheit 1 am Niederhalter 24 der Falzflanscheinrichtung gewährleistet, zum anderen durch die definierte Positionierung der die Schweißelektrode 6 tragenden Kolbenstange KSt. Hierfür wird der zweite, im unteren Gehäuseteil 2.2 angeordnete Trennkolben TK2 über einen pneumatischen Druckmittelanschluss P2 von der Kraftquelle 14 versorgt/druckbeaufschlagt und die die Schweißelektrode 6 tragende Kolbenstange KSt innerhalb des Gehäuses 2 positioniert (um eine vorbestimmte Wegstrecke eingezogen). Dabei versorgt die Kraftquelle 14 (zum Zwecke der Druckbeaufschlagung des zweiten Trennkolbens TK2 von unten) den zweiten Teilgehäuseteil 2.22 über den gehäuseseitigen Druckmittelanschluss P2 und ein 2/4-Wege-Schaltventil V1 in der in Fig. 3 dargestellten Schaltposition. Gleichzeitig ist der obere erste Teilgehäuseteil 2.11 des oberen Gehäuseteils 2.1 über seinen Druckmittelanschluss P1 und das Schaltventil V2 drucklos geschaltet (Figur 3) und das Trennventils Vₜᵣₑₙₙ im Verbindungskanal VK geöffnet. Hierdurch kann der zweite Trennkolben TK2 und damit die Kolbenstange KSt bzw. die daran gekoppelte Schweißelektrode 6 in die definierte Grundposition gebracht werden.

Mit zugefahrenem Niederhalter 24 und in Grundposition befindlicher Schweißelektrodeneinheit 1 wird nunmehr ein herkömmlicher Falzvorgang durch nicht gezeigte Falzbackenelemente, die mit dem als Widerlager dienenden Falzbett 22 entsprechend zusammenwirken, durchgeführt.

Der eigentliche Schweißvorgang wird erst nach Abschluss des Falzvorgangs durchgeführt, indem die Schweißelektrode 6 der Schweißelektrodeneinheit 1 in die sog. Schweißposition ausgefahren wird, in der die Schweißelektrode 6 bzw. deren wirksame Elektrodenfläche (Elektrodenspitze, die auch ballig ausgeführt sein kann) in Kontakt mit der Schweißstelle ST der Blechanordnung (B1, B2) steht. Hierfür wird das Schaltventil V1 in die gemäß Figur 4 gezeigte Schaltposition umgeschaltet, so dass über den ersten Druckmittelanschluss P1 der erste Trennkolben TK1 von oben druckbeaufschlagt wird und damit über das zwischen den beiden Trennkolben befindliche Koppelmedium (Hydraulikflüssigkeit) Druck auf den zweiten Trennkolben TK2 übertragen und die Kolbenstange KSt ausgefahren wird, bis die die Schweißelektrode 6 mit ihrer Spitze (bzw. ihrem freien Ende) die Schweißstelle ST kontaktiert. In dem in Figur 4 gezeigten zwischenzeitlichen Betriebszustand (Übergangs-Betriebszustand) der Schweißelektrodeneinheit 1 ist die Schweißelektrode 6 ausgefahren und kontaktiert die zu schweißende Schweißstelle ST, wobei das Kraftspeichermittel 8 noch nicht vorgespannt ist. Für den Aufbau des gewünschten Drucks, mit dem die Schweißelektrode 6 die Schweißstelle ST während eines Schweißvorgangs beaufschlagen soll, wird über die Kraftquelle 14 (unter Beibehaltung der in Fig. 4 gezeigten Schaltventilposition) der erste Trennkolben TK 1 und über das geöffnete Trennventil Vₜᵣₑₙₙ auch der zweite Trennkolben TK2 weiter mit Druck beaufschlagt, sodass das Kraftspeichermittel 8 gegen die als Widerlager wirkende Schweißstelle ST vorgespannt wird. Ist die gewünschte Vorspannung des Kraftspeichermittels 8 erreicht (was z.B. über einen beispielsweise zwischen Kolbenstange KSt und Schweißelektrode 6 angeordneten Kraftaufnehmer erfasst/überwacht werden kann), werden die beiden Gehäuseteile 2.1 und 2.2, bzw. die über den Verbindungskanal VK miteinander verbundenen Teilgehäuseteile 2.12 und 2.21, drucktechnisch voneinander getrennt. Hierfür wird über das Schaltventil V2 das Trennventil Vₜᵣₑₙₙ über seinen pneumatischen Druckmittelanschluss P3 mit Druck beaufschlagt und in die entsprechende Schließposition überführt. In diesem in Figur 5 dargestellten Betriebszustand ist die Schweißelektrodeneinheit 1 schweißbereit, sodass unter konstantem Druck und einem von der Kraftquelle 14 entkoppelten Kraftspeichermittel 8 ein Schweißvorgang durch Bestromung der Schweißelektrode 6 durchgeführt werden kann. Auch hier wird die Nachsetzbewegung ausschließlich durch bzw. aus dem Kraftspeichermittel 8 bewirkt/ausgeglichen.

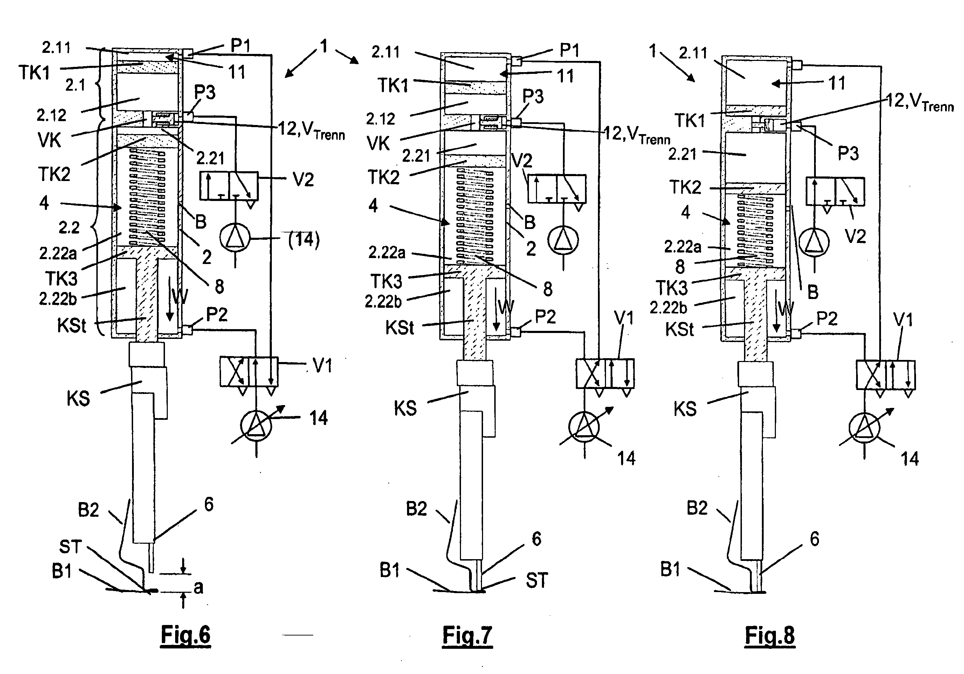

Auch die beiden weiteren Ausführungsformen gemäß den Figuren 6-8 und 9-11 arbeiten nach dem vorstehend beschrieben Funktionsprinzip, welches nachfolgend noch einmal in allgemeiner Form beschrieben wird:
Durchführung des Falzvorgangs, durch Zufahren des Niederhalters 24 und anschließenden Falzvorgang durch nicht dargestellten Falzbacken in Wechselwirkung mit dem Falzbett 22.
Durchführung des Schweißvorgangs, durch
   - Druckaufbau im ersten Teilgehäuseteil 2.11,
   - Überströmen des zwischen dem ersten Trennkolben TK1 und dem zweiten Trennkolben TK2 befindlichen Druckmediums vom zweiten Teilgehäuseteil 2.12 des ersten Gehäuseteils 2.1 in den ersten Teilgehäuseteil 2.21 des zweiten Gehäuseteils 2.2,
   - Ausfahren der Kolbenstange KSt, bis diese in Kontakt mit der Schweißstelle ST steht,
   - Vorspannen des Kraftspeichermittels 8, bis eine vorbestimmte (über den Kraftaufnehmer detektierte) Vorspannkraft (bzw. ein gewünschter Vorspanndruck) erreicht ist,
   - Entkoppelung bzw. Abtrennung der Kraftquelle 14 durch Schließen des Trennventils Vₜᵣₑₙₙ,
   - Durchführen des Schweißvorgangs durch Bestromung der Schweißelektrode 6,
   - Ankoppelung der Kraftquelle 14 durch Öffnen des Trennventils Vₜᵣₑₙₙ,
   - Überführen der Schweißelektrode 6 in die eingefahrene Position (Grundposition) durch Druckbeaufschlagung des unteren Trennkolbens TK2 (TK3).

Die Ausführungsform gemäß den Figuren 6-8 unterscheidet sich von der anhand der Figuren 3-5 beschriebenen Ausführung lediglich dadurch, dass das Kraftspeichermittel 8 (gemäß Figur 6-8) zwischen zwei drucktechnisch tatsächlich trennenden Trennkolben TK2 und TK3 angeordnet ist, während gemäß der Ausführungsform der Figuren 3-5 das Kraftspeichermittel 8 zwischen dem zweiten Trennkolben TK2 und einem mit Druckausgleichsbohrungen 0 aufweisenden Führungskoben (der den unteren Teilgehäuseteil 2.22 (gemäß Figur 3-5) drucktechnisch wiederum in zwei getrennte Einzelräume 2.22a und 2.22b (gemäß Figur 6-8) unterteilt) der Kolbenstange KSt angeordnet ist. Bei der gemäß den Figuren 6-8 gezeigten Ausführungsform ist eine feste mechanische Anbindung der Schraubenfeder an die sie einschließenden Kolben TK2 und TK3 nicht erforderlich - die Schraubenfeder kann bei der Montage lose zwischen den Trennkolben TK2 und TK3 eingelegt sein. Des Weiteren kann das Kraftspeichermittel 8 wahlweise (wie dargestellt) als Schraubenfeder oder als Luft- bzw. Pneumatikfeder oder eine Kombination von beiden realisiert sein. Je nach Ausführungsform können im Gehäusewandbereich zwischen den beiden Trennkolben TK2 und TK3 eine oder mehrere Entlüftungsbohrungen B vorgesehen sein.

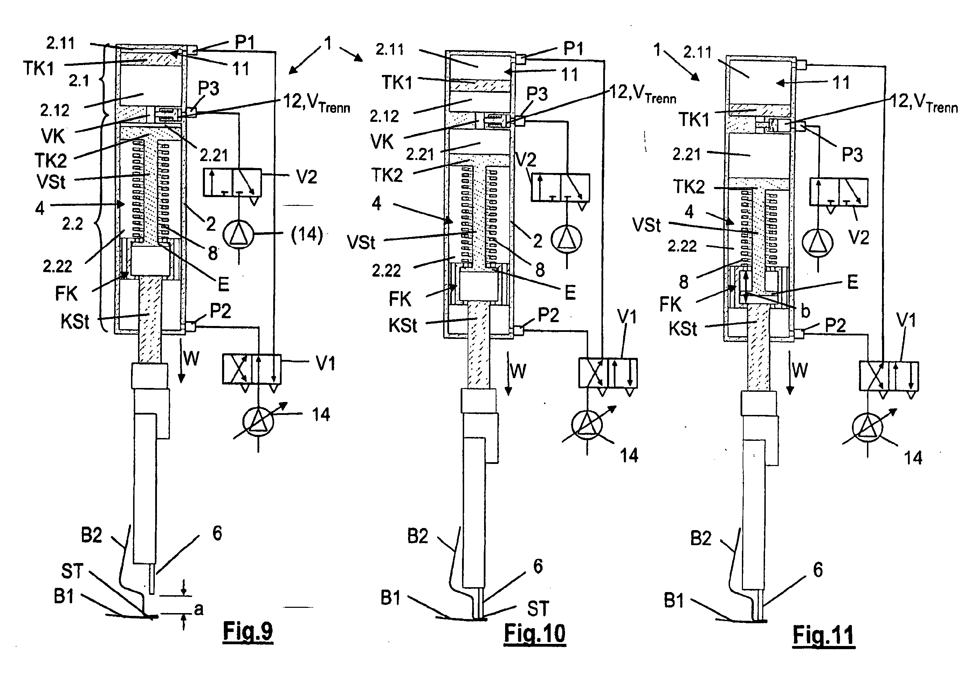

Die Ausführungsform gemäß den Figuren 9-11 unterscheidet sich von der anhand der Figuren 3-5 beschriebenen Ausführung insbesondere dadurch, dass auch hier die Schraubenfeder nicht mechanisch mit den beidseitig angrenzenden Kolbenflächen verbunden ist (was konstruktiv und montagetechnisch einen erheblichen Aufwand bedeutet). Dies wird bei der dargestellten Ausführungsform dadurch erreicht, dass zwischen dem zweiten Trennkolben TK2 und der mit der Schweißelektrode 6 verbundenen Kolbenstange KSt eine mechanische Kopplung realisiert ist dergestalt, dass der Trennkolben TK2 und die mit diesem nunmehr mechanisch verbundene Kolbenstange KSt in und entgegen der Wirkrichtung W um eine begrenzte Wegstrecke b gegeneinander bewegbar sind, wobei in Wirkrichtung W der Trennkolben TK2 und die Kolbenstange KSt (zum Zwecke der Vorspannung der zwischen ihnen angeordneten Schraubenfeder) mechanisch entkoppelt und entgegen der Wirkrichtung W (zum Zwecke der Einziehung der Schweißelektrode 6) mechanisch gekoppelt (bzw. formschlüssig miteinander verbunden) sind. Hierfür weist der zweite Trennkolben TK2 eine in Richtung Kolbenstange KSt sich erstreckende Verbindungsstange VSt auf, deren freies Ende mit einer (führungskolbenartigen) Erweiterung E in einem zylindrischen Verbindungsraum VR des Führungskolbens FK der Kolbenstange KSt um die Wegstrecke b linear beweglich geführt ist. Dabei ist um die Verbindungsstange VSt herum eine Schraubenfeder angeordnet, die sich mit ihrem einen freien Ende an der Unterseite des zweiten Trennkolben TK2 und mit ihrem anderen freien Ende gegen die Kolbenstange KSt (bzw. deren Führungskolben FK) abstützt. In Grundstellung der Schweißelektrode 6 (Figur 9) ist die Schraubenfeder mit Vorteil spielfrei aber nicht (oder nur unwesentlich) vorgespannt montiert, so dass entgegen der Wirkrichtung W eine unmittelbare mechanische Kopplung (Formschluss) zwischen Trennkolben TK2 und Kolbenstange KSt besteht und in Wirkrichtung W (für die Wegstrecke b) der Trennkolben TK2 und die Kolbenstange KSt mechanisch entkoppelt sind, sodass der in Wirkrichtung W druckbeaufschlagte Kolben TK2 ausschließlich über die Schraubenfeder auf die Kolbenstange KSt wirkt und diese in Wirkrichtung W bis Erreichen der Schweißposition (Figur 10), ohne eine Relativbewegung zwischen Trennkolben TK2 und Kolbenstange KSt, verfährt. Erst mit Erreichen der Schweißposition, in der die Schweißelektrode bei Aufrechterhaltung oder Erhöhung des Druckes auf den Trennkolben TK2 gegen die als Widerlager dienende Schweißstelle ST gedrückt wird, verfährt der Trennkolben TK2 (aufgrund der in Wirkrichtung W nicht vorhandenen mechanischen Kopplung) relativ zur Kolbenstange KSt und spannt die Schraubenfeder gegen die Kolbenstange KSt vor (Figur 11).

In Fig. 12 ist eine Falzflanschschweißvorrichtung in Form einer Vorrichtung zum randseitigen stoffschlüssigen Verbinden von Blechen, insbesondere von Karosserieblechen einer Kraftfahrzeugkarosserie (wie etwa entsprechenden Türinnen- und Türaußenblechen) beschrieben. Diese Vorrichtung 21 umfasst ein Falzbett 22 zur Aufnahme zweier Bleche B1, B2 (beispielsweise eines Türaußenbleches B1 und eines Türinnenbleches B2) einen bewegbaren Niederhalter 24 über den in einer aktiven Betriebsposition die im Falzbett 22 liegenden Bleche B1, B2 in Richtung Falzbett 22 gedrückt werden können, sowie zumindest ein mindestens eine Schweißelektrode 6 aufweisendes thermisches Fügewerkzeug. Dabei ist das Fügewerkzeug durch die vorstehend bereits beschriebene Schweißelektrodeneinheit 1 gebildet. Im dargestellten Ausführungsbeispiel sind insgesamt 2 Schweißelektrodeneinheiten 1 ortsfest am Niederhalter 24 befestigt. In der Praxis einer derartigen Falzflanschschweißvorrichtung werden bevorzugt mindestens sechs bis acht der besagten Schweißelektrodeneinheiten 1, ortsfest am Niederhalter 24 befestigt sein. In einem zeichnerischen Durchbruch ist unterhalb einer Deckplatte des Niederhalters 24 eine zentrale Masseanbindung 26 in Form einer Klemmeinrichtung dargestellt. In den Fig. 12 und 13 ist in einzelnen Detailansichten die Anklemmung der Masseanbindung 26 an eines der zu verbindenden Bleche B1, B2 dargestellt. Im vorliegenden Fall drückt die Schweißelektrode 6 im umgefalzten Falzbereich (von der Tür-Innenseite) auf das Außenblech B1, während die gemeinsame zentrale Masseanbindung 26 am Innenblech B2, welches randseitig in den umgebördelten Falzflansch des Außenbleches B1 eingelegt ist, kontaktiert ist.

Wie in Fig. 13 schematisch dargestellt, werden die beiden Schweißelektrodeneinheiten 1 über einen gemeinsamen Trafo T elektrisch versorgt, wobei der Trafo T für beide Schweißelektrodeneinheiten 1 über die zentrale Masseanbindung 26 ein gemeinsames Massepotential und über seine Versorgungsleitung L1 die beiden Schweißelektroden 6 elektrisch versorgt.

## Patentansprüche

1. Schweißelektrodeneinheit (1) umfassend
- eine Nachsetzeinrichtung (4),
- und eine mit der Nachsetzeinrichtung (4) kinematisch wirkverbundene und linear beweglich angeordnete Schweißelektrode (6),
- wobei die Nachsetzeinrichtung (4) ein vorgespanntes oder vorspannbares Kraftspeichermittel (8) aufweist, über welches die Schweißelektrode (6) mit einer vorbestimmten Kraft beaufschlagbar ist, und wobei das Kraftspeichermittel (8) mit einer Kraftquelle (14) wirkverbunden und von dieser kraftbeaufschlagt ist,
**dadurch gekennzeichnet, dass**
- das Kraftspeichermittel (8) im vorgespannten Zustand über ein Betätigungselement (12) von der Kraftquelle (14) wirkungsmäßig entkoppelbar ist, derart, dass das Kraftspeichermittel (8) von der Kraftquelle (14) nicht mehr kraftbeaufschlagt ist.

2. Schweißelektrodeneinheit (1) nach Anspruch 1, **dadurch gekennzeichnet, dass**
- das Kraftspeichermittel (8) zumindest bereichsweise einen linearen Kraft/Weg Verlauf aufweist.

3. Schweißelektrodeneinheit (1) nach Anspruch 1 oder 2, **dadurch gekennzeichnet, dass**
- das Kraftspeichermittel (8) eine Schraubenfeder, einen Elastomer-, einen Hydraulik- und/oder einen Pneumatikspeicher umfasst.

4. Schweißelektrodeneinheit (1) nach einem der vorstehenden Ansprüche, **dadurch gekennzeichnet, dass**
- die Kraftquelle (14) als Pumpe oder Kompressor ausgebildet ist.

5. Schweißelektrodeneinheit (1) nach Anspruch 4, **gekennzeichnet durch**
- eine mit dem Kraftspeichermittel (8) kraftmäßig in Serie geschaltete Rückstelleinrichtung (10), wobei die Rückstelleinrichtung (10) über die Kraftquelle (14) druckbeaufschalgbar ist, derart, dass das Kraftspeichermittel (8) **durch** Druckbeaufschlagung der Rückstelleinrichtung (10), entgegen der Wirkrichtung (W) in Richtung Schweißstelle (ST), mit Druck beaufschlagbar ist, so dass die Schweißelektrode (6) aus einer ausgefahrenen Schweißposition in eine eingefahrene Grundposition überführbar ist.

6. Schweißelektrodeneinheit (1) nach Anspruch 5, **dadurch gekennzeichnet, dass**
- die Rückstelleinrichtung (10) zwischen Nachsetzeinrichtung (4) und Schweißelektrode (6) angeordnet ist.

7. Schweißelektrodeneinheit (1) nach einem der vorstehenden Ansprüche 1-4, **gekennzeichnet durch**
- eine mit dem Kraftspeichermittel (8) kraftmäßig in Serie geschaltete, als Kolbenzylindereinheit ausgeführte Spanneinrichtung (11), wobei die Spanneinrichtung (11) über die Kraftquelle (14) druckbeaufschalgbar ist, derart, dass das Kraftspeichermittel (8) **durch** Druckbeaufschlagung der Spanneinrichtung (11), in Wirkrichtung (W) in Richtung Schweißstelle (ST), mit Druck beaufschlagbar ist, so dass das Kraftspeichermittel (8) gegen eine als Widerlager dienende, sich in der Schweißstelle (ST) gegen ein Blech (B2) abstützende Schweißelektrode (6) vorspannbar ist.

8. Schweißelektrodeneinheit (1) nach Anspruch 7, **dadurch gekennzeichnet, dass**
- die Spanneinrichtung (11) in Wirkrichtung (W) gesehen der Nachsetzeinrichtung (4) in Serie vorgeschaltet ist.

9. Vorrichtung (21) zum randseitigen, stoffschlüssigen Verbinden von Blechen, insbesondere Karosserieblechen einer Kraftfahrzeugkarosserie, umfassend
- ein Falzbett (22) zur Aufnahme zweier Bleche (B1, B2),
- einen bewegbaren Niederhalter (24), über den in einer aktiven Betriebsposition die im Falzbett (22) liegenden Bleche (B1, B2) in Richtung Falzbett (22) gedrückt werden können,
- sowie zumindest ein, mindestens eine Schweißelektrode (6) aufweisendes, thermisches Fügewerkzeug,
wobei
- das Fügewerkzeug eine Schweißelektrodeneinheit (1) gemäß einem der vorstehenden Ansprüche 1-8 umfasst.

10. Vorrichtung (21) nach Anspruch 9, **dadurch gekennzeichnet, dass**
- die Schweißelektrodeneinheit (1) am Niederhalter (24) befestigt ist.

11. Vorrichtung (21) nach einem der vorstehenden Ansprüche 9 oder 10, **dadurch gekennzeichnet, dass** am Niederhalter (24) eine Mehrzahl von Schweißelektrodeneinheiten (1) befestigt sind, wobei zumindest zwei der Schweißelektrodeneinheiten (1) eine gemeinsame zentrale Masseanbindung (26) aufweisen.

12. Vorrichtung nach Anspruch 11, **dadurch gekennzeichnet, dass**
- die gemeinsame zentrale Masseanbindung (26) als Masseklemme zur klemmenden Befestigung ausgebildet ist.

13. Vorrichtung nach Anspruch 12, **dadurch gekennzeichnet, dass**
- die Masseklemme ortsfest an den Niederhalter (24) angebunden ist.

14. Verfahren zum Erzeugen einer Schweißverbindung, umfassend die folgenden Verfahrensschritte:
- Bereitstellen einer Schweißelektrodeneinheit (1) gemäß einem der vorstehenden Patentansprüche 1-8 mit einem vorgespanntem Kraftspeichermittel (8) oder Überführung eines Kraftspeichermittels (8) einer Schweißelektrodeneinheit (1) gemäß einem der vorstehenden Patentansprüche 1-8 in einen vorgespannten Zustand,
- Entkoppelung des Kraftspeichermittels (8) durch Aktivierung des Betätigungselements (12) vor Bestromung der Schweißelektrode (6), und
- Bestromung der Schweißelektrode (6) zur Erzeugung der Schweißverbindung.

15. Verfahren nach Anspruch 14, **dadurch gekennzeichnet, dass**
- in der Schweißposition, vor Bestromung der Schweißelektrode (6), die Vorspanneinrichtung (10) bis auf eine vorbestimmte Vorspannkraft vorgespannt wird, wobei die Schweißelektrode (6) während des Vorspannvorgangs die als Widerlager dienende Schweißstelle (ST) kontaktiert.

## Claims

1. Welding electrode unit (1), comprising
- a readjusting device (4),
- and a welding electrode (6) kinematically connected in an operative manner to the readjusting device (4) and arranged in such a way that it can be moved linearly,
- the readjusting device (4) having pretensioned or pretensionable force-storing means (8), which can be used to apple a predetermined force to the welding electrode (6), and the force-storing means (8) being operatively connected to a source of force (14) and a force being applied to it by this source,
**characterized in that**
- the force-storing means (8) in the pretensioned state can be operatively decoupled from the source of force (14) by means of an actuating element (12) in such a way that the force-storing means (8) no longer has a force applied to it by the source of force (14).

2. Welding electrode unit (1) according to Claim 1, **characterized in that**
- the force-storing means (8) has at least in certain regions a linear force/displacement profile.

3. Welding electrode unit (1) according to Claim 1 or 2, **characterized in that**
- the force-storing means (8) comprises a helical spring, an elastomeric, a hydraulic and/or a pneumatic store.

4. Welding electrode unit (1) according to one of the preceding claims, **characterized in that**
- the source of force (14) is formed as a pump or compressor.

5. Welding electrode unit (1) according to Claim 4, **characterized by**
- a restoring device (10), which in terms of force is connected in series with the force-storing means (8), the restoring device (10) being able to have a pressure applied to it by the source of force (14) in such a way that the force-storing means (8) can have pressure applied to it by pressure being applied by the restoring device (10), counter to the operative direction (W) in the direction of the welding location (ST), so that the welding electrode (6) can be transferred from an extended welding position into a retracted home position.

6. Welding electrode unit (1) according to Claim 5, **characterized in that**
- the restoring device (10) is arranged between the readjusting device (4) and the welding electrode (6).

7. Welding electrode unit (1) according to one of the preceding Claims 1-4, **characterized by**
- a tensioning device (11), which in terms of force is connected in series with the force-storing means (8) and is configured as a piston-cylinder unit, the tensioning device (11) being able to have pressure applied to it by the source of force (14) in such a way that the farce-storing means (8) can have pressure applied to it by pressure being applied by the tensioning device (11), in the operative direction (W) in the direction of the welding location (ST), so that the force-storing means (8) can be pretensioned against a welding electrode (6), which serves as an abutment and is supported in the welding location (ST) against a panel (B2).

8. Welding electrode unit (1) according to Claim 7, **characterized in that**
- seen in the operative direction (W), the tensioning device (11) is arranged in series ahead of the readjusting device (4).

9. Device (21) for joining metal sheets at the edges in a material-bonding manner, in particular body panels of a motor vehicle body, comprising
- a folding bed (22) for receiving two panels (B1, B2),
- a movable hold-down device (24), by means of which, in an active operating position, the panels (B1, B2) lying in the folding bed (22) can be pressed in the direction of the folding bed (22),
- and at least one thermal joining tool, having at least one welding electrode (6),
- the joining tool comprising a welding electrode unit (1) according to one of the preceding Claims 1-8.

10. Device (21) according to Claim 9, **characterized in that**
- the welding electrode unit (1) is attached to the hold-down device (24).

11. Device (21) according to either of the preceding Claims 9 and 10, **characterized in that** a plurality of welding electrode units (1) are attached to the hold-down device (24), at least two of the welding electrode units (1) having a common central connection to earth (26).

12. Device according to Claim 11, **characterized in that**
- the common central connection to earth (26) is formed as an earthing terminal for clamping attachment.

13. Device according to Claim 12, **characterized in that**
- the earthing terminal is fixedly connected to the hold-down device (24).

14. Method for producing a welded joint, comprising the following method steps:
- providing a welding electrode unit (1) according to one of the preceding Patent Claims 1-8, having a pretensioned force-storing means (8) or transfer of a force-storing means (8) of a welding electrode unit (1) according to one of the preceding Patent Claims 1-8 in a pretensioned state,
- decoupling the force-storing means (8) by activating the actuating element (12) before supplying power to the welding electrode (6), and
- supplying power to the welding electrode (6) to produce the welded connection.

15. Method according to Claim 14, **characterized in that**
- in the welding position, the pretensioning device (10) is pretensioned to a predetermined pretensioning force before supplying power to the welding electrode (6), the welding electrode (6) contacting the welding location (ST), serving as an abutment, during the pretensioning operation.

## Revendications

1. Unité (1) d'électrode de soudage comprenant :
un dispositif de regarnissage (4) et
une électrode de soudage (6) raccordée fonctionnellement et cinématiquement au dispositif de regarnissage (4) et disposée de manière à pouvoir se déplacer linéairement,
le dispositif de regarnissage (4) présentant un moyen (8) d'accumulation de force, précontraint ou apte à être précontraint, qui permet d'appliquer une force prédéterminée sur l'électrode de soudage (6), le moyen (8) d'accumulation de force étant raccordé fonctionnellement à une source de force (14) apte à y appliquer une force,
**caractérisée en ce que**
lorsqu'il est à l'état précontraint, le moyen (8) d'accumulation de force peut être désaccouplé fonctionnellement de la source de force (14) par l'intermédiaire d'un élément d'actionnement (12), de telle sorte que la source de force (14) ne puisse plus appliquer de force sur le moyen (8) d'accumulation de force.

2. Unité (1) d'électrode de soudage selon la revendication 1, **caractérisée en ce qu'**au moins certaines des parties de la courbe force/course du moyen (8) d'accumulation de force sont linéaires.

3. Unité (1) d'électrode de soudage selon les revendications 1 ou 2, **caractérisée en ce que** le moyen (8) d'accumulation de force comporte un ressort hélicoïdal, un accumulateur en élastomère, hydraulique et/ou pneumatique.

4. Unité (1) d'électrode de soudage selon l'une des revendications précédentes, **caractérisée en ce que** la source de force (14) est configurée comme pompe ou compresseur.

5. Unité (1) d'électrode de soudage selon la revendication 4, **caractérisée par** un dispositif de rappel (10) raccordé dynamiquement en série au moyen (8) d'accumulation de force, la source de force (14) pouvant appliquer une poussée sur le dispositif de rappel (10) de telle sorte qu'une poussée puisse être appliquée sur le moyen (8) d'accumulation de force par application d'une poussée sur le dispositif de rappel (10) en opposition à la direction d'action (W) vers l'emplacement de soudage (ST), de telle sorte que l'électrode de soudage (6) puisse passer depuis une position déployée de soudage jusque dans une position rétractée de base.

6. Unité (1) d'électrode de soudage selon la revendication 5, **caractérisée en ce que** le dispositif de rappel (10) est disposé entre le dispositif de regarnissage (4) et l'électrode de soudage (6).

7. Unité (1) d'électrode de soudage selon l'une des revendications 1 à 4 qui précèdent, **caractérisée par** un dispositif de serrage (11) raccordé dynamiquement en série au moyen (8) d'accumulation de force et configuré comme unité à cylindre et piston, la source de force (14) pouvant appliquer une poussée sur le dispositif de serrage (11) de telle sorte qu'une poussée puisse être appliquée sur le moyen (8) d'accumulation de force dans la direction d'action (W) vers l'emplacement de soudage (ST) par l'intermédiaire de la poussée appliquée sur le dispositif de serrage (11), de telle sorte que le moyen (8) d'accumulation de force puisse être précontraint contre une électrode de soudage (6) servant de contre-appui et s'appuyant contre une tôle (B2) en position de soudage (ST).

8. Unité (1) d'électrode de soudage selon la revendication 7, **caractérisée en ce que** le dispositif de serrage (11) est raccordé en série au dispositif de regarnissage (4), en amont dans la direction d'action (W).

9. Ensemble (21) destiné à relier en correspondance de matière les bords de tôles, en particulier des tôles de carrosserie d'une carrosserie de véhicule automobile, l'ensemble comprenant :
un berceau plié (22) comprenant deux tôles (B1, B2),
un support mobile (24) par lequel les tôles (B1, B2) situées dans le berceau plié (22) puissent être repoussées en direction du berceau plié (22) dans une position de fonctionnement active,
ainsi qu'au moins un outil thermique de jonction présentant au moins une électrode de soudage (6),
l'outil de jonction comprenant une unité (1) d'électrode de soudage selon l'une des revendications 1 à 8 qui précèdent.

10. Ensemble (21) selon la revendication 9, **caractérisé en ce que** l'unité (1) d'électrode de soudage est fixée sur le support (24).

11. Ensemble (21) selon l'une des revendications 9 ou 10 qui précèdent, **caractérisé en ce que** plusieurs unités (1) d'électrode de soudage sont fixées sur le support (24), au moins deux des unités (1) d'électrode de soudage présentant un raccordement central commun (26) à la masse.

12. Ensemble selon la revendication 11, **caractérisé en ce que** le raccordement central commun (26) à la masse est configuré comme borne de masse permettant une fixation serrée.

13. Ensemble selon la revendication 12, **caractérisé en ce que** la borne de masse est raccordée en position immobile au support (24).

14. Procédé de formation d'une liaison soudée comprenant les étapes suivantes :
prévoir une unité (1) d'électrode de soudage selon l'une des revendications 1 à 8 qui précèdent et présentant un moyen (8) d'accumulation de force précontraint ou transfert d'un moyen (8) d'accumulation de force d'une unité (1) d'électrode de soudage selon l'une des revendications 1 à 8 qui précèdent dans un état précontraint,
désaccoupler le moyen (8) d'accumulation de force par activation de l'élément d'actionnement (12) avant que l'électrode de soudage (6) soit alimentée en courant et
alimenter en courant l'électrode de soudage (6) en vue de former la liaison soudée.

15. Procédé selon la revendication 14, **caractérisé en ce que** dans la position de soudage, avant que l'électrode de soudage (6) soit alimentée en courant, le dispositif de précontrainte (10) est précontraint à une force de précontrainte prédéterminée, l'électrode de soudage (6) étant en contact avec l'emplacement de soudage (ST) servant de contre-appui pendant l'opération de précontrainte.
